# EUROPEAN PATENT SPECIFICATION

(11) **EP 3 125 516 B1**
(45) Date of publication and mention of the grant of the patent: **12.02.2020**
(21) Application number: 15179153.0
(22) Date of filing: 30.07.2015
(51) Int. Cl.: H04N 1/00

(54) **IMAGE PROCESSING APPARATUS, IMAGE FORMING APPARATUS AND DEW DETERMINATION METHOD**
BILDVERARBEITUNGSVORRICHTUNG, BILDERZEUGUNGSVORRICHTUNG TAUBESTIMMUNGSVERFAHREN
APPAREIL DE TRAITEMENT D'IMAGE, APPAREIL DE FORMATION D'IMAGE ET PROCÉDÉ DE DÉTERMINATION DU POINT DE ROSÉE

(43) Date of publication of application: 01.02.2017
(73) Proprietor: Kabushiki Kaisha Toshiba, Tokyo 105-8001 (JP); Toshiba TEC Kabushiki Kaisha, Tokyo 141-8562 (JP)
(72) Inventor: SHIRAISHI, Hiroyuki, Shinagawa-ku, Tokyo 141-0032 (JP)
(74) Representative: Bandpay & Greuter

(56) References cited:
- EP-A1- 2 552 092
- JP-A- 2003 018 370
- JP-U- H01 149 162
- US-A1- 2013 003 147

## Description

### FIELD

Embodiments described herein relate generally to an image processing apparatus, an image forming apparatus and a dew determination method.

### BACKGROUND

A scanner is known which functions as an apparatus for reading one or more sheets and generating digital data. The scanner comprises a mirror, a lens and other optical components for forming the image of a sheet on the illuminated surface of an image pickup element such as a Charge Coupled Device (CCD) . Sometimes, dew is formed on the optical component in certain environments or under certain conditions. If dew is formed on the optical component, then the image of the sheet formed on the illuminated surface of the image pickup element is likely to be blurred, resulting in the reduction of reading quality. Therefore, the conventional scanner prevents the formation of dew with an electric heater which increases the ambient temperature of an optical component to a temperature above a dew point temperature.

However, for the reason of space or cost, sometimes an electric heater cannot be arranged in a scanner. For example, a scanner capable of synchronously reading the both sides of a sheet comprises a unit for reading the surface of the sheet and a unit for reading the back of the sheet. In this case, for the reason of space or cost, an electric heater cannot be arranged in the scanner. This scanner has the following problem that whether or not the reduction in reading quality is caused by dew or a poor light source cannot be determined.

Document JP2003018370 discloses an image reader performing dew formation detection based on an MTF calculation of a resolution chart attached to a white plate. Dew is detected, because dew formation generally lowers the calculated MTF.

Document US2013/0003147 discloses an image scanner and image forming apparatus capable of detection of dew condensation even if a light source undergoes ageing, using pixel difference values across a read boundary.

### SUMMARY OF INVENTION

The object of the present invention is to provide an image processing apparatus, an image forming apparatus and a dew determination method which is capable of determining whether or not the reduction in reading quality is caused by the formation of dew.

This object is solved by the present invention as defined in the appended claims.

### DESCRIPTION OF THE DRAWINGS

Fig. 1 is an external view of an image forming apparatus according to an embodiment;
Fig. 2 is a sectional view illustrating the main structure of an image processing apparatus according to an embodiment;
Fig. 3 is the ground plan of the white reference plate of an image processing apparatus according to an embodiment;
Fig. 4 is a block diagram illustrating the main structure of the control system of an image processing apparatus according to an embodiment;
Fig. 5 is a flowchart exemplifying the actions of an image processing apparatus according to an embodiment;
Fig. 6 is a diagram illustrating an example of the result of the reading of a ladder part in an image processing apparatus according to an embodiment;
Fig. 7A is a diagram illustrating another example of the result of the reading of a ladder part in an image processing apparatus according to an embodiment; and
Fig. 7B is a diagram illustrating still another example of the result of the reading of a ladder part in an image processing apparatus according to an embodiment.

### DETAILED DESCRIPTION

In order to resolve the above technical problem, there is provided an image processing apparatus comprises a light source unit, a reading unit, a white reference plate, a check mark and a determination unit. The light source unit illuminates a sheet. The reading unit reads the image of the sheet. The white reference plate is a plate-shaped component for shading compensation. The check mark is a mark formed on the white reference plate and located outside a range in which the reading unit reads the sheet. The determination unit determines whether or not dew is formed based on the result of the reading of the check mark by the reading unit.

The white reference plate may be a plate-shaped component extending in a primary scanning direction.

The check mark may be at least one linear mark formed along the primary or a secondary scanning direction.

The check mark may be a black mark.

When the maximum value of the quantity of the reading light of the check mark is smaller than a preset first threshold, the determination unit may determine whether or not dew is formed.

When the difference of the maximum value and the minimal value of the quantity of the reading light of the check mark is smaller than a preset second threshold, the determination unit may determine the existence of dew.

When the difference of the maximum value and the minimal value of the quantity of the reading light of the check mark is greater than the preset second threshold, the determination unit may determine that the light source unit is abnormal.

The image processing apparatus may further comprise an image forming unit configured to form an image according to the image data of the sheet read by the reading unit of the image processing apparatus.

The present invention further relates to a dew determination method. The method comprises illuminating a white reference plate for shading compensation, reading the white reference plate and determining whether or not dew is formed based on the result of the reading of a check mark which is formed on the white reference plate and located outside a range in which a sheet is read.

When the maximum value of the quantity of the reading light of the check mark is smaller than a preset first threshold, whether or not the dew is formed is determined.

When the difference of the maximum value and the minimal value of the quantity of the reading light of the check mark is smaller than a preset second threshold, the formation of dew is determined.

When the difference of the maximum value and the minimal value of the quantity of the reading light of the check mark is greater than the preset second threshold, the light source unit is determined as abnormal.

The image processing apparatus, the image forming apparatus and the dew determination method disclosed herein are described below with reference to accompanying drawings.

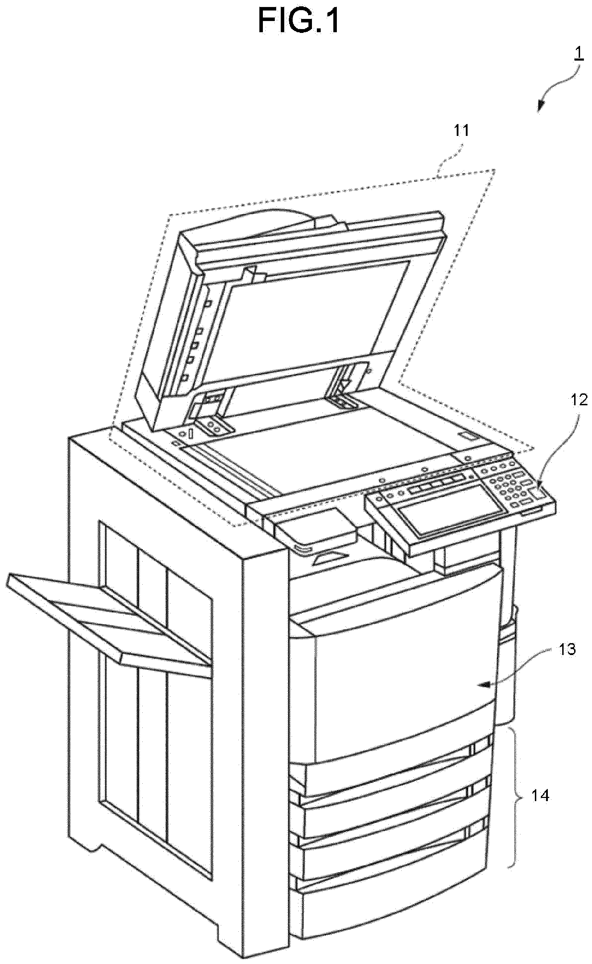

Fig. 1 is an external view of an image forming apparatus according to an embodiment. The image forming apparatus 1 is, for example, a Multi-Function Peripheral (MFP) . The image forming apparatus 1 reads, for example, one or more sheets and generates digital data. The image forming apparatus 1 forms an image with the generated digital data. The sheet is, for example, paper on which an original, words or images is/are recorded or any other object that can be read by the image forming apparatus 1. The sheet is hereinafter referred to as an 'original'.

The image forming apparatus 1 comprises an image reading apparatus 11 (image processing apparatus), a control panel unit 12, a printer unit 13 (image forming unit) and a paper tray 14. The image reading apparatus 11 reads the image of an original G. The image reading apparatus 11 outputs data (hereinafter referred to as 'read image data') representing the read image (hereinafter referred to as 'read image') to the printer unit 13.

The control panel unit 12 functions as a user interface for receiving an operation input of the user. The control panel 12 is equipped with, for example, a touch screen consisting of integrated operation section and display section. The operation section of the control panel unit 12 receives various instructions given to the image forming apparatus 1 based on the operation of the user. The display section of the control panel unit 12 displays various kinds of information for the user. The displayed information is, for example, information representing the action state of the image forming apparatus 1. In addition to the touch panel, the control panel unit 12 further comprises operating buttons . The touch panel of the control panel unit 12 may also be replaced by an independent operation section and an independent display section.

The printer unit 13 comprises a printer engine, an image processing substrate and a printer engine control substrate. The printer unit 13 inputs the read image data output from the image reading apparatus 11. The image processing substrate of the printer unit 13 carries out an image processing for the read image data. The printer engine control substrate of the printer unit 13 forms an image on a sheet according to the read image data subjected to the image processing. The printer unit 13 is capable of printing, on a sheet, an image input from an external device via a network. The printer unit 13 may also be an inkjet image forming apparatus, but not limited to an image forming apparatus for fixing a toner image. The paper tray 14 is a tray capable of accommodating the sheets used by the printer unit 13.

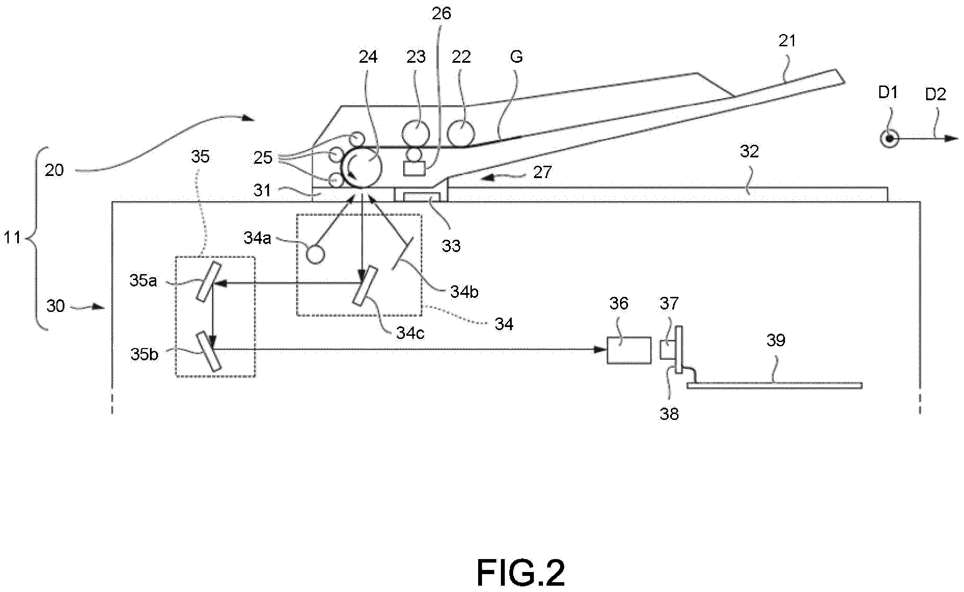

Next, the image reading apparatus 11 functioning as an image processing apparatus of an embodiment is described in detail with reference to Fig. 2. Fig. 2 is a sectional view illustrating the main structure of an image processing apparatus according to an embodiment. The image reading apparatus 11 comprises an original conveyer 20 and an original reader 30.

The original conveyer 20 comprises an original feeding unit 21, a pickup roller 22, a register roller 23, a belt transfer drum 24, conveying rollers 25, a back reading module 26 and an original discharging unit 27. The original conveyer 20 automatically feeds the originals G held on the original feeding unit 21 to an original image reading position one by one. The original conveyer 20 is capable of reading the image on the back of the automatically fed original G.

The original feeding unit 21 is where the original G conveyed by the original conveyer 20 is placed. A plurality of originals G can be held on the original feeding unit 21. The pickup roller 22 is a drive roller for conveying the originals G on the original feeding unit 21 to the register roller 23 one by one. The register roller 23 is a drive roller for conveying the original G fed from the pickup roller 22 to the belt transfer drum 24 at a given time.

The belt transfer drum 24 is a drum which conveys the original G fed from the register roller 23 towards a secondary scanning direction D2 by winding up the original G thereon and then rotating. The original G is wound on nearly half-cycle of the belt transfer drum 24. The conveying roller 25 is a roller which conveys the original G fed from the register roller 23 together with the belt transfer drum 24. The conveying rollers 25 are arranged along the circumferential direction of the belt transfer drum 24.

The back reading module 26 is configured on the back side of the original G conveyed by the belt transfer drum 24 towards the secondary scanning direction D2. The back reading module 26 reads an image on the back of the original G. The back reading module 26 is provided with a light source unit including a plurality of light sources for emitting lights of different wavelengths. For example, the light source unit includes a red LED light source, a green LED light source and a blue LED light source. The red LED light source emits red light. The green LED light source emits green light. The blue LED light source emits blue light. The back reading module 26 is equipped with a reading unit for reading an image on the back of the original G. For example, the back reading module 26 is provided with a Charge Coupled Device (CCD) linear sensor in which a CCD element is arranged in a primary scanning direction D1. The original discharging unit 27 is a unit for discharging the original G conveyed by the belt transfer drum 24 towards the secondary scanning direction D2.

The original reader 30 comprises an ADF glass 31, an original stage glass 32, a white reference plate 33, a first carriage 34, a second carriage 35, a condensing lens 36, a CCD linear sensor 37 (a reading unit), a CCD sensor substrate 38 and a control substrate 39. The original reader 30 reads an image on the surface of an original G automatically fed by the original conveyer 20. The original reader 30 reads the image on the side of an original G facing the original stageglass 32, wherein the original G is placed on the original stage glass 32 by the user.

The ADF glass 31 is a transparent plate glass positioned on the original reader 30. The ADF glass 31 is arranged under the belt transfer drum 24 of the original conveyer 20. The originals G successively conveyed by the belt transfer drum 24 towards the secondary scanning direction D2 successively pass the ADF glass 31. The position where the ADF glass 31 is configured is the position where the original G conveyed by the original conveyer 20 is read. The original stage glass 32 is a transparent plate glass arranged on the original reader 30. The original stage glass 32 is located on the right side of the ADF glass 31 shown in Fig. 2. The original G to be read without using the original conveyer 20 is placed on the original stage glass 32 by the user.

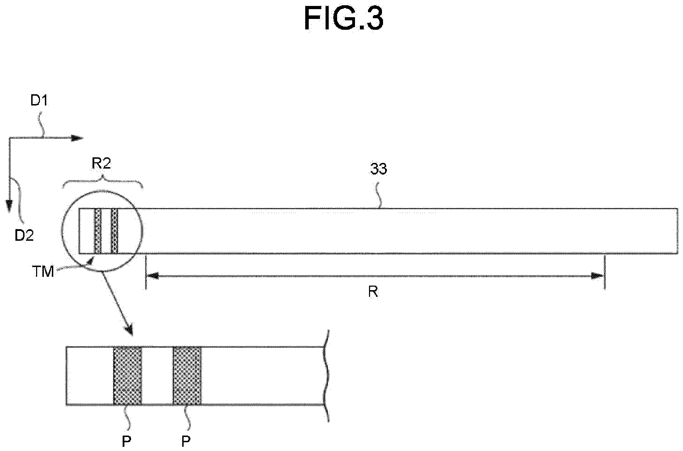

The white reference plate 33 is a white plate providing a reference color for shading correction. The white reference plate 33 is arranged on the original reader 30 and located between the ADF glass 31 and the original stage glass 32. Fig. 3 is the ground plan of the white reference plate of an image processing apparatus according to an embodiment. The white reference plate 33 is a plate-shaped component having long sides and short sides. The long sides of the white reference plate 33 are located along the primary scanning direction D1. That is, the short sides of the white reference plate 33 are located along the secondary scanning direction D2. The long side of the white reference plate 33 is longer than a predetermined original reading range R1. The original reading range R1 is a range in which the CCD linear sensor 37 reads an original G. For example, the original reading range R1 is set to be as long as the long side (297mm) or the short side (210mm) of A4 size paper.

A check mark TM for determining whether or not dew is formed is formed on the white reference plate 33. The check mark TM is formed on the bottom side of the white reference plate 33 and located outside of the original reading range R1. The bottom side of the white reference plate 33 is a side facing the first carriage 34. In the example shown in Fig. 3, the check mark TM is formed on the right end of the white reference plate 33. For example, the check mark TM is a ladder mark formed by arranging the black patterns P linearly formed in the secondary scanning direction D2 along the primary scanning direction D1. The part where the check mark TM is formed is hereinafter referred to as a 'ladder part R2'.

The check mark TM can be any object that is a contrastive to the white reference plate 33. For example, the check mark TM may consist of one pattern P or more than three patterns P. The check mark TM may be an object consisting of one or more black linear patterns arranged in the primary scanning direction D1. The check mark TM may be an object consisting of color pattern or gray pattern.

The first carriage 34 comprises a light source unit 34a (a light source unit), a reflector 34b and a first mirror 34c. The first carriage 34 can be movably mounted on a track extending along the secondary scanning direction D2. When the original G automatically fed by the original conveyer 20 is read, the first carriage 34 is fixed under the ADF glass 31, as shown in Fig. 2. When the original G placed on the original stage glass 32 is read, the first carriage 34 moves below the original stage glass 32 towards the secondary scanning direction D2.

The first carriage 34 emits light upwards. The first carriage 34 reflects the light entering from above to the second carriage 35. For example, the first carriage 34 reflects light towards the ADF glass 31. The first carriage 34 reflects the light reflected by the original G passing the ADF glass 31 to the second carriage 35. Alternatively, the first carriage 34 emits light towards the original stage glass 32 to reflect the light reflected by the original G on the original stage glass 32 to the second carriage 35.

The light source unit 34a faces the surface of the original G conveyed towards the secondary scanning direction D2. The light source unit 34a emits light slantingly upwards. The light source unit 34a has a plurality of light sources which emit lights of different wavelengths. For example, the light source unit 34a includes a red LED light source for emitting red light, a green LED light source for emitting green light and a blue LED light source for emitting blue light. The reflector 34b reflects the light emitted from the light source unit 34a to the reflector 34b slantingly upwards. The first mirror 34c reflects the light entering from above to the second carriage 35. For example, the first mirror 34c reflects the light reflected by the original G on the ADF glass 31 towards the second carriage 35. Alternatively, the first mirror 34c reflects the light reflected by the original G on the original stage glass 32 towards the second carriage 35.

The second carriage 35 comprises a second mirror 35a and a third mirror 35b. The second carriage 35 can be movably mounted on the same track with the first carriage 34 and located on the left side of the first carriage 34 shown in Fig. 2. When the original G automatically fed by the original conveyer 20 is read, the second carriage 35 is fixed at the position shown in Fig. 2. When the original G placed on the original stage glass 32 is read, the second carriage 35 moves in the secondary scanning direction D2 matching with the movement of the first carriage 34. The second carriage 35 reflects the light coming from the first carriage 34 to the condensing lens 36. In other words, the second mirror 35a reflects the light coming from the first carriage 34 downwards, and the third mirror 35b reflects the light reflected by the second mirror 35a to the condensing lens 36.

The condensing lens 36 condenses the light reflected by the third mirror 35b to form an image on the illuminated surface of the CCD linear sensor 37. Like the CCD linear sensor of the back reading module 26, the CCD linear sensor 37 is a linear sensor in which a CCD element is arranged in the primary scanning direction D1. The CCD sensor substrate 38 is a substrate on which a circuit is formed to activate the CCD linear sensor 37 to work. The control substrate 39 is a substrate which comprehensively controls the actions of the image reading apparatus 11 and on which a circuit for obtaining a read image is formed.

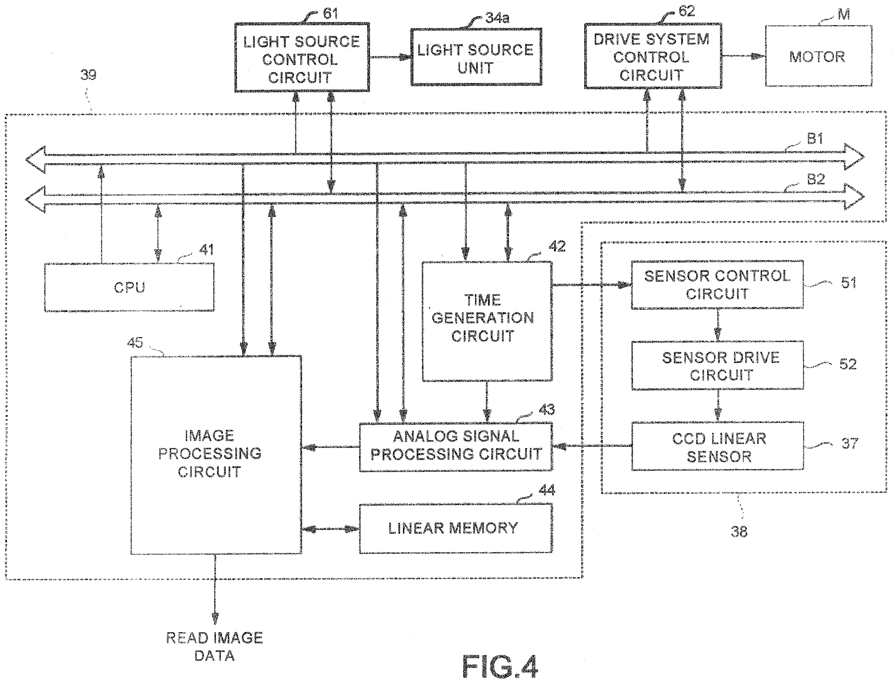

Next, the control system of the image reading apparatus 11 serving as an image processing apparatus of an embodiment is described in detail with reference to Fig. 4. Fig. 4 is a block diagram illustrating the main structure of the control system of an image processing apparatus according to an embodiment. Representation of a control circuit for controlling the back reading module 26 is omitted in Fig. 4. The motor M shown in Fig. 4 represents a motor for driving a drive system arranged in the image reading apparatus 11. The drive system comprises a pickup roller 22, a register roller 23, a belt transfer drum 24, a conveying roller 25, a first carriage 34 and a second carriage 35.

The control substrate 39 comprises a CPU 41 (a determination unit), a time generation circuit 42, an analog signal processing circuit 43, a linear memory 44 and an image processing circuit 45. The control substrate 39 has an address bus B1 and a data bus B2. In the control substrate 39, the CPU 41, the time generation circuit 42, the analog signal processing circuit 43 and the image processing circuit 45 are connected with the address bus B1 and the data bus B2.

The CPU 41 comprehensively controls the actions of the image reading apparatus 11. For example, the CPU 41 controls a light source control circuit 61 to control the illumination of the light source unit 34a. The CPU 41 also controls the illumination of the back reading module 26. The CPU 41 controls the time generation circuit 42 to control the reading action of the CCD linear sensor 37. The CPU 41 controls the analog signal processing circuit 43 and the image processing circuit 45 to control an image processing performed on a signal obtained by the CCD linear sensor 37. The CPU 41 controls the reading action of the back reading module 26 and an image processing performed on a signal obtained by the back reading module 26. The CPU 41 controls a drive system control circuit 62 as well as the actions of the original conveyer 20, the first carriage 34 and the second carriage 35.

The CPU 41 causes a shading compensation to be implemented in the image processing circuit 45 based on the reading result of the white reference plate 33. Prior to the shading compensation, the CPU 41 determines whether or not dew is formed based on the result of the reading of the ladder part R2 of the white reference plate 33. The CPU 41 determines whether or not dew is formed when the maximum value of the quantity of the reading light of the ladder part R2 is smaller than a preset white level threshold (a first threshold) . This determination is made for the reason that the image formed on the illuminated surface of the CCD linear sensor 37 is blurred in the case of dew and the overall reading light quantity is therefore reduced.

The CPU 41 calculates the difference (amplitude) of the maximum value and the minimal value of the reading light quantity from the ladder part R2 of the white reference plate 33. If the calculated amplitude is below a preset amplitude threshold (a second threshold), the CPU 41 determines that dew is formed. This determination is made for the reason that the image of the check mark TM is blurred in the case of dew and the obtained amplitude is therefore reduced.

On the other hand, if the calculated amplitude is above the preset amplitude threshold, the CPU 41 determines that the light source unit 34a is abnormal. This determination is made for the reason that the quantity of the light emitted from the light source unit 34a is totally reduced when the light source unit 34a is abnormal. However, the minimal value (black level) of the reading light quantity from the ladder part R2 is not changed. Thus, the reduction appearing in the case of dew is not presented.

Under the control of the CPU 41, the time generation circuit 42 generates various time signals for use by the image reading apparatus 11. For example, the time generation circuit 42 generates signals for driving the CCD linear sensor 37 and the CCD linear sensor of the back reading module 26. The signals for driving the CCD linear sensors are shift gate signals (SH signals) and transfer clocks. The time generation circuit 42 generates a signal necessary for activating the analog signal processing circuit 43.

The analog signal processing circuit 43 processes the signals (analog signals) obtained from the CCD linear sensor 37 and the CCD linear sensor of the back reading module 26. The linear memory 44 is a memory for storing the data of a thread read by the CCD linear sensor 37 and the CCD linear sensor of the back reading module 26. The linear memory 44 compensates for the offset in the reading position of the CCD linear sensor.

Under the control of the CPU 41, the image processing circuit 45 processes the data read by the CCD linear sensor 37 and the CCD linear sensor of the back reading module 26. For example, the image processing circuit 45 compensates for the offset in the reading position of the CCD linear sensor using the linear memory 44. The image processing circuit 45 carries out a shading compensation processing, an LOG conversion processing and other processing.

In addition to the CCD linear sensor 37, the CCD sensor substrate 38 further comprises a sensor control circuit 51 and a sensor drive circuit 52. The sensor control circuit 51 controls the actions of the CCD linear sensor 37 using the various time signals output by the time generation circuit 42 of the control substrate 39. For example, the sensor control circuit 51 adjusts the reading time of the CCD linear sensor 37 based on a time signal output by the time generation circuit 42. Under the control of the sensor control circuit 51, the sensor drive circuit 52 drives the CCD linear sensor 37. The sensor control circuit 51 may also be arranged in the time generation circuit 42.

Under the control of the CPU 41, the light source control circuit 61 turns on or turns off the light source unit 34a. Under the control of the CPU 41, the light source control circuit 61 is capable of separately controlling the quantity of the light emitted from each of the red LED light source, the green LED light source and the blue LED light source of the light source unit 34a. Under the control of the CPU 41, the drive system control circuit 62 controls the motor M for driving the original conveyer 20, the first carriage 34 and the second carriage 35.

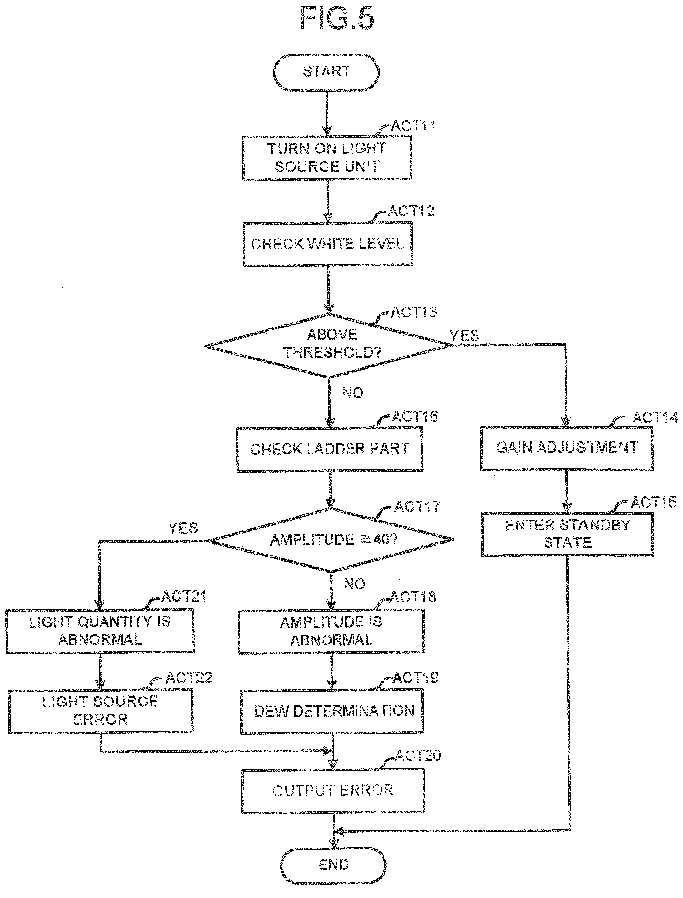

Next, the actions of the image reading apparatus 11 functioning as an image processing apparatus of an embodiment are exemplified below with reference to Fig. 5. Fig. 5 is a flowchart exemplifying the actions of an image processing apparatus according to an embodiment. The processing shown in the flowchart of Fig. 5 is started at the moment the image forming apparatus 1 is powered on or recovered from a sleep mode.

After the processing is started, the light source unit 34a is turned on first (Act 11) . Specifically, a control signal is output from the CPU 41 to the light source control circuit 61. Then, The red LED light source, the green LED light source and the blue LED light source of the light source unit 34a are controlled to be equal in light quantity so that the light source unit 34a emits white light.

Sequentially, a processing of reading the white reference plate 33 and checking a white level is implemented (Act 12) . Specifically, the CPU 41 controls the motor M to move the first carriage 34 to be below the white reference plate 33 so that the back of the white reference plate 33 is illuminated by the light emitted from the light source unit 34a. Then, the CCD linear sensor 37 reads the ladder part R2 and the back of the white reference plate 33. The data read by the CCD linear sensor 37 from the white reference plate 33 is processed by the analog signal processing circuit 43 and then input to the image processing circuit 45. Next, the CPU 41 checks the maximum value (white level) of the reading light quantity of the ladder part R2.

The CPU 41 determines whether or not the checked white level is above the preset white level threshold (first threshold) (Act 13). If the checked white level is determined to be above the preset white level threshold (Act 13: Yes), the image processing circuit 45 carries out a gain adjustment (Act 14) . Sequentially, the image reading apparatus 11 enters a standby state under the control of the CPU 41 (Act 15). Then, the series of the processing shown in Fig. 5 is ended.

Contrarily, if the checked white level is determined to be below the preset white level threshold (Act 13: No), the CPU 41 checks the ladder part R2 (Act 16). Specifically, the CPU 41 calculates the difference (amplitude) of the maximum value and the minimal value of the quantity of the reading light of the ladder part R2.

Sequentially, the CPU 41 determines whether or not the calculated amplitude is above the preset amplitude threshold (second threshold) (Act 17). In the example shown in Fig. 5, the amplitude threshold is set to be 40. If the calculated amplitude is determined to be below the preset amplitude threshold (Act 17: No), the CPU 41 determines that the amplitude is abnormal (Act 18) and that dew is formed (Act 19). Then, the CPU 41 outputs error information indicating the formation of dew to the control panel unit 12 (Act 20) . Then, the series of the processing shown in Fig. 5 is ended.

On the other hand, if the calculated amplitude is determined to be above the preset amplitude threshold (Act 17: Yes), the CPU 41 determines that the light quantity is abnormal (Act 21) and that there is a light source error (abnormal light source) (Act 22). Then, the CPU 41 outputs error information indicating a light source error to the control panel unit 12 (Act 20). Then, the series of the processing shown in Fig. 5 is ended.

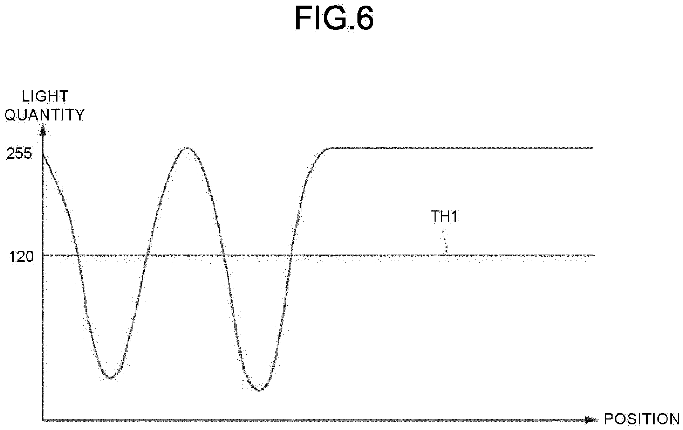

Fig. 6 is a diagram illustrating an example of the result of the reading of a ladder part in an image processing apparatus according to an embodiment. The reading result shown in Fig. 6 is a result obtained in the case where the image reading apparatus 11 is in a normal state. The normal state refers to a state in which neither the abnormality of the light source unit 34a nor the formation of dew occurs. In Fig. 6, the position of the primary scanning direction D1 is the horizontal axis, and the quantity of the reading light of the ladder part R2 is the longitudinal axis. The minimum value of the longitudinal axis is 0, and the maximum value of the longitudinal axis is 255. In the example shown in Fig. 6, the white level threshold TH1 (first threshold) is set to be 120. In the example shown in Fig. 6, the maximum value of the quantity of the reading light of the ladder part R2 is 255, higher than the white level threshold TH1. Thus, in the flowchart of Fig. 5, the checked white level is determined to be higher than the white level threshold is determined (Act 13: Yes).

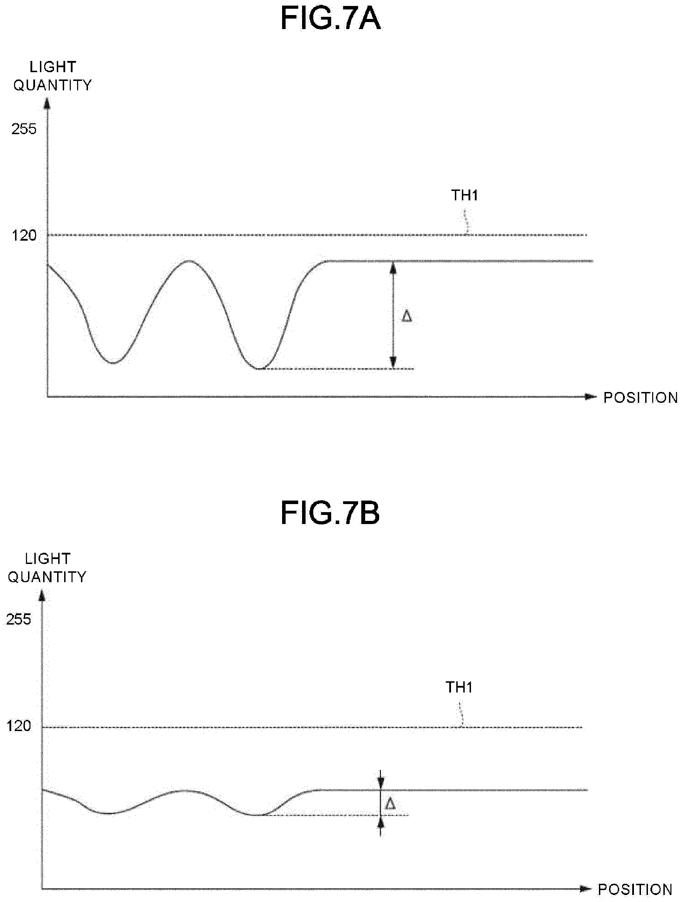

Fig. 7A and Fig. 7B are diagrams illustrating another two examples of the result of the reading of a ladder part in an image processing apparatus according to an embodiment. The reading result shown in Fig. 7A is a result obtained in the case where the light source unit 34a is abnormal. The reading result shown in Fig. 7B is a result obtained in the case of the formation of dew. In Fig. 7A and Fig. 7B, the position of the primary scanning direction D1 is the horizontal axis, and the quantity of the light read from the ladder part R2 is the longitudinal axis, like in Fig. 6. The minimum value of the longitudinal axis is 0, and the maximum value of the longitudinal axis is 255. The white level threshold TH1 is set to be 120.

In the examples shown in Fig. 7A and Fig. 7B, the maximum value of the quantity of the light read from the ladder part R2 is smaller than the white level threshold TH1. Thus, in the flowchart shown in Fig. 5, the checked white level is determined to be smaller than the white level threshold (Act 13: No).

In the example shown in Fig. 7A, the minimum value (black level) of the quantity of the light read from the ladder part R2 is substantially equal to that exemplified in Fig. 6. Thus, the difference (amplitude Δ) between the maximum value and the minimal value of the quantity of the reading light of the ladder part R2 is above the preset amplitude threshold. Therefore, in the flowchart of Fig. 5, the amplitude Δ is determined to be higher than the amplitude threshold (Act 17: Yes).

In the example shown in Fig. 7B, the maximum value of the quantity of the light read from the ladder part R2 is smaller than that exemplified in Fig. 7A. In the example shown in Fig. 7B, the minimum value (black level) of the quantity of the reading light of the ladder part R2 is greater than those exemplified in Fig. 6 and Fig. 7A. Thus, the amplitude Δ is obviously smaller than that exemplified in Fig. 7A. Thus, in the flowchart of Fig. 5, the amplitude Δ is determined to be smaller than the amplitude threshold (Act 17: No).

If the user gives a read instruction to the image reading apparatus 11 in the standby state, then the image reading apparatus 11 reads an original G. If the reading processing is started, then the CPU 41 controls the motor M to move the first carriage 34 to be below the ADF glass 31 first. Next, the CPU 41 controls the motor M to rotate the pickup roller 22, the register roller 23, the belt transfer drum 24 and the conveying roller 25. Then, the originals G held on the original feeding unit 21 are picked up by the pickup roller 22 one by one. The original G fed from the pickup roller 22 is conveyed to the belt transfer drum 24 by the register roller 23 at a given time.

The original G conveyed to the belt transfer drum 24 is conveyed on the ADF glass 31 towards the secondary scanning direction D2 while being wound on the rotating belt transfer drum 24. Then, the light reflected from the surface of the original G passing the ADF glass 31 is read by the linear sensor 37. Meanwhile, the light reflected from the back of the original G conveyed in the secondary scanning direction D2 is read by the back reading module 26. The image processing circuit 45 performs an image processing on the data read by the linear sensor 37 and the back reading module 26. The data subjected to the image processing is output to the printer unit 13 as read image data. Then, an image is formed on a sheet by the printer unit 13 based on the read image data.

As stated above, the image processing apparatus disclosed herein illuminates a white reference plate for shading compensation. The image processing apparatus reads the white reference plate. The image processing apparatus determines whether or not dew is formed based on the result of the reading of a check mark which is formed on the white reference plate and located outside a range in which a sheet is read. This result provides the foundation for determining whether or not dew is the reason for the reduction in reading quality.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the invention as defined in the appended claims.

## Claims

1. An image processing apparatus, comprising:
a light source unit configured to illuminate a sheet;
a reading unit (37) configured to read the image of the sheet;
a white reference plate (33) for shading compensation;
a check mark (TM) formed on the white reference plate and located outside a range in which the reading unit reads the sheet; and
a determination unit (41) configured to determine whether or not dew is formed based on the result of the reading of the check mark by the reading unit, wherein,
when the reading unit (37) reads that the maximum value of the quantity of the reading light of the check mark is smaller than a preset first threshold, the determination unit (41) is configured to determine whether or not dew is formed;
when the reading unit (37) reads that the difference of the maximum value and the minimal value of the quantity of the reading light of the check mark is smaller than a preset second threshold, the determination unit (41) is configured to determine the existence of dew; and
when the reading unit (37) reads that the difference of the maximum value and the minimal value of the quantity of the reading light of the check mark is greater than the preset second threshold, the determination unit (41) is configured to determine that the light source unit is abnormal.

2. The image processing apparatus according to claim 1, wherein
the white reference plate is a plate-shaped component extending in a primary scanning direction; and
the check mark is at least one linear mark formed along the primary or a secondary scanning direction.

3. The image processing apparatus according to claim 2, wherein
the check mark is a black mark.

4. The image processing apparatus according to any one of claims 1 to 3, further comprising:
an image forming unit configured to form an image according to the image data of the sheet read by the reading unit of the image processing apparatus.

5. A dew determination method, comprising:
illuminating, using a light source, a white reference plate for shading compensation;
reading the white reference plate; and
determining whether or not dew is formed based on the result of the reading of a check mark which is formed on the white reference plate and located outside a range in which a sheet is read, the determining step comprises:
determining whether or not the dew is formed, when the reading unit (37) reads that the maximum value of the quantity of the reading light of the check mark is smaller than a preset first threshold;
determining the formation of dew, when the reading unit (37) reads that the difference of the maximum value and the minimal value of the quantity of the reading light of the check mark is smaller than a preset second threshold; and
determining the light source as abnormal, when the reading unit (37) reads **that** the difference of the maximum value and the minimal value of the quantity of the reading light of the check mark is greater than the preset second threshold.

## Patentansprüche

1. Bildverarbeitungsvorrichtung, umfassend:
eine Lichtquelleneinheit, die konfiguriert ist, um ein Blatt zu beleuchten,
eine Ableseeinheit (37), die konfiguriert ist, um das Bild des Blatts zu abzulesen;
eine weiße Referenzplatte (33) zur Schattenkompensierung;
eine Markierung (TM), die auf der weißen Referenzplatte gebildet ist und sich außerhalb eines Bereichs befindet, in dem die Leseeinheit das Blatt abliest; und
eine Bestimmungseinheit (41), die konfiguriert ist, um zu bestimmen , ob Tau gebildet ist oder nicht, basierend auf dem Ergebnis des Ablesens der Markierung durch die Ableseeinheit,
wenn die Ableseeinheit (37) abliest, dass der maximale Wert der Menge des Ableselichts der Markierung kleiner als eine voreingestellte erste Schwelle ist, die Bestimmungseinheit (41) konfiguriert ist, um zu bestimmen, ob Tau geformt ist oder nicht;
wenn die Ableseeinheit (37) abliest, dass die Differenz zwischen dem maximalen Wert und dem minimalen Wert der Menge des Ableselichts der Markierung kleiner als eine voreingestellte zweite Schwelle ist, die Bestimmungseinheit (41) konfiguriert ist, um das Vorhandensein von Tau zu bestimmen; und
wenn die Ableseeinheit (37) abliest, dass die Differenz zwischen dem maximalen Wert und dem minimalen Wert der Menge des Ableselichts der Markierung größer als die voreingestellte zweite Schwelle ist, die Bestimmungseinheit (41) konfiguriert ist, um zu bestimmen, dass die Lichtquelleneinheit anormal ist.

2. Bildeverarbeitungsvorrichtung nach Anspruch 1, wobei
die weiße Referenzplatte eine plattenförmige Komponente ist, die sich in einer primären Scanrichtung erstreckt, und
die Markierung mindestens eine lineare Markierung ist, die entlang der primären oder einer sekundären Scanrichtung gebildet ist.

3. Bildeverarbeitungsvorrichtung nach Anspruch 2, wobei
die Markierung eine schwarze Markierung ist.

4. Bildverarbeitungsvorrichtung nach einem der Ansprüche 1 bis 3, weiter umfassend:
eine Bilderzeugungseinheit die konfiguriert ist, um ein Bild gemäß den Bilddaten des Blatts zu bilden, die von der Ableseeinheit der Bildverarbeitungsvorrichtung abgelesen werden.

5. Taubestimmungsverfahren, umfassend:
Beleuchten, unter Verwendung einer Lichtquelle, einer weißen Referenzplatte zur Schattenkompensierung;
Ablesen der weißen Referenzplatte; und
Bestimmen, ob Tau gebildet ist oder nicht, basierend auf dem Ergebnis des Ablesens einer Markierung, die auf der weißen Referenzplatte gebildet ist und sich außerhalb eines Bereichs befindet, in dem ein Blatt gelesen wird, wobei der Schritt des Bestimmens Folgendes umfasst:
Bestimmen, ob der Tau gebildet wird oder nicht, wenn die Ableseeinheit (37) abliest, dass der maximale Wert der Menge des Ableselichts der Markierung kleiner als eine voreingestellte erste Schwelle ist;
Bestimmen der Bildung von Tau, wenn die Ableseeinheit (37) abliest, dass die Differenz zwischen dem maximalen Wert und dem minimalen Wert der Menge des Ableselichts der Markierung kleiner als eine voreingestellte zweite Schwelle ist; und
Bestimmen, dass die Lichtquelle anormal ist, wenn die Ableseeinheit (37) abliest, dass die Differenz zwischen dem maximalen Wert und dem minimalen Wert der Menge des Ableselichts der Markierung größer als die voreingestellte zweite Schwelle ist.

## Revendications

1. Appareil de traitement d'image, comprenant :
une unité de source lumineuse configurée de manière à éclairer une feuille ;
une unité de lecture (37) configurée de manière à lire l'image de la feuille ;
une plaque de référence blanche (33) pour une compensation d'ombrage ;
une marque de contrôle (TM) formée sur la plaque de référence blanche et située en dehors d'une plage dans laquelle l'unité de lecture lit la feuille ; et
une unité de détermination (41) configurée de manière à déterminer si de l'humidité s'est formée ou non, sur la base du résultat de la lecture de la marque de contrôle par l'unité de lecture, dans lequel,
lorsque l'unité de lecture (37) indique que la valeur maximale de la quantité de la lumière de lecture de la marque de contrôle est inférieure à un premier seuil prédéfini, l'unité de détermination (41) est configurée de manière à déterminer si de l'humidité s'est formée ou non ;
lorsque l'unité de lecture (37) indique que la différence entre la valeur maximale et la valeur minimale de la quantité de la lumière de lecture de la marque de contrôle est inférieure à un second seuil prédéfini, l'unité de détermination (41) est configurée de manière à déterminer l'existence d'humidité ; et
lorsque l'unité de lecture (37) indique que la différence entre la valeur maximale et la valeur minimale de la quantité de la lumière de lecture de la marque de contrôle est supérieure au second seuil prédéfini, l'unité de détermination (41) est configurée de manière à déterminer que l'unité de source lumineuse présente une anomalie.

2. Appareil de traitement d'image selon la revendication 1, dans lequel :
la plaque de référence blanche est un composant en forme de plaque s'étendant dans la direction de balayage primaire ; et
la marque de contrôle correspond à au moins une marque linéaire formée le long de la direction de balayage primaire ou d'une direction de balayage secondaire.

3. Appareil de traitement d'image selon la revendication 2, dans lequel :
la marque de contrôle est une marque noire.

4. Appareil de traitement d'image selon l'une quelconque des revendications 1 à 3, comprenant en outre :
une unité de formation d'image configurée de manière à former une image selon les données d'image de la feuille lue par l'unité de lecture de l'appareil de traitement d'image.

5. Procédé de détermination d'humidité, comprenant les étapes ci-dessous consistant à :
éclairer, à l'aide d'une source lumineuse, une plaque de référence blanche pour une compensation d'ombrage ;
lire la plaque de référence blanche ; et
déterminer si de l'humidité s'est formée ou non, sur la base du résultat de la lecture d'une marque de contrôle qui est formée sur la plaque de référence blanche et située en dehors d'une plage dans laquelle une feuille est lue, dans lequel l'étape de détermination comprend les étapes ci-dessous consistant à :
déterminer si de l'humidité s'est formée ou non, lorsque l'unité de lecture (37) indique que la valeur maximale de la quantité de la lumière de lecture de la marque de contrôle est inférieure à un premier seuil prédéfini :
déterminer la présence d'humidité, lorsque l'unité de lecture (37) indique que la différence entre la valeur maximale et la valeur minimale de la quantité de lumière de lecture de la marque de contrôle est inférieure à un second seuil prédéfini ; et
déterminer que la source lumineuse présente une anomalie, lorsque l'unité de lecture (37) indique que la différence entre la valeur maximale et la valeur minimale de la quantité de lumière de lecture de la marque de contrôle est supérieure au second seuil prédéfini.
